# EUROPEAN PATENT SPECIFICATION

(11) **EP 2 802 503 B1**
(45) Date of publication and mention of the grant of the patent: **28.09.2016**
(21) Application number: 13700786.0
(22) Date of filing: 11.01.2013
(51) Int. Cl.: B62B 3/06, B62B 5/00, B66F 9/075

(54) **HAND OPERATED PALLET TRUCK**
PALLETTENHUBWAGEN MIT HANDANTRIEB
TRANSPALETTE AVEC COMMANDE MANUELLE

(30) Priority: 12.01.2012 GB 201200464; 29.06.2012 GB 201211526
(43) Date of publication of application: 19.11.2014
(73) Proprietor: Chadwick Materials Handling Ltd, Corsham, Wiltshire SN13 9XZ (GB)
(72) Inventor: CHADWICK, Thomas Henry, Corsham Wiltshire SN13 9XZ (GB)
(74) Representative: Bardo, Julian Eason
(86) International application number: PCT/GB2013/050056
(87) International publication number: WO 2013/104920

(56) References cited:
- EP-A1- 0 287 483
- DE-U1- 29 918 650
- SE-B- 404 520
- US-A- 3 549 161

## Description

This invention relates to a hand operated pallet truck and to a method of operating such a truck.

Trucks of this kind are often used to move heavy loads by hand. The general design of such trucks commonly comprises a pair of lifting forks that project forwardly and are able to be inserted into a pallet on which a heavy load is supported. With the lifting forks so inserted, they can then be raised by manual operation of a hydraulic pump on the truck; typically the pump is operated by reciprocating, pivotal movement of a handle about a horizontal axis at the rear of the truck. Once the lifting forks have been raised off the ground the truck can then be pulled by a user pulling the handle. An example of a truck of this kind is shown in GB 2 275 038.

Because loads on pallet trucks can be very large a very considerable effort may be required to initiate the movement of the truck over the ground. Even to cause the truck to move at slow speed, a considerable momentum has to be imparted to it and that requires a high pulling force. Once a suitable speed, which may be a slow speed, has been achieved, that speed can be maintained relatively easily. The same kind of issue arises if, as may be required, a user tries to push a pallet truck, starting from a stationary position. Of course a considerable effort is also required to bring a loaded pallet truck to a halt even if it is moving at slow speed. Often, it is necessary to manoeuvre a loaded pallet truck in a confined space. It then becomes necessary to move it to and fro, which involves starting and stopping the truck many times.

For many years it has been known that one way of applying a very high driving force to a pallet truck is to couple the wheel to the tiller handle and provide a coupling by which pivotal movement of the tiller handle about a horizontal axis causes rotation of a wheel. US3549161, filed in 1968 provides such an example in which such a coupling is provided. A wheel (castor) of the truck can be driven in one direction by one pawl and in the opposite direction by another pawl, the pawls engaging teeth on a gear fixed to rotate with the wheel (castor). Engagement and disengagement of the pawls is controlled by a control lever via a bowden cable. The lever has three operative positions: one for driving the gear in one direction via one pawl; another for driving the gear in the opposite direction via the other pawl; and a third position where neither pawl is engaged.

In 1977, a patent application that resulted in Swedish Patent No.SE404520 was filed by AB Bygg Och Transportekonomi (BT), seeking to provide another form of coupling for enabling pivoting movement of the tiller handle about a horizontal axis to rotate the wheels; in that case friction pads were movable in a direction parallel to the axis of rotation of a pair of wheels into engagement with the wheels. It is believed that no trucks incorporating the design were sold.

In 2003, the same Swedish technical team as had obtained SE404520 filed a new Swedish Patent Application and a corresponding International Application for another form of coupling. That International application was published as WO2004067350 and describes a coupling for enabling pivoting movement of the tiller handle about a horizontal axis to rotate the wheels. As with their earlier patent, SE404520, the coupling is controlled by a control lever via a bowden cable. The coupling has three states: a first for driving the truck forwards; a second for driving the truck backwards; and a third position where the coupling is not engaged. In the case of this later Swedish design, the coupling comprises an inner cylindrical surface provided with flat machined surfaces where cylindrical rollers loosely held in a cage are provided. In the first state of the coupling the rollers become wedged only when pivoting movement of the tiller handle is in a first direction so that the movement drives the truck forwards and in the second state of the coupling the rollers become wedged only when pivoting movement of the tiller handle is in a second direction, opposite to the first direction, so that the movement drives the truck rearwards. In the third state the rollers are not wedged for any direction of movement. A truck according to WO2004067350 has been manufactured and sold as the BT ProLifter and is currently available for sale.

DE29918650U1 and EP0287483A1 provide further examples of coupling designs that convert movement of a handle of a pallet truck into rotation of a wheel of the truck.

A problem with the designs referred to above are that it is difficult to provide a coupling that is able consistently to withstand the very high forces that have to be transmitted through it when the pallet truck is fully loaded. Another problem is the complexity of the mechanisms employed; that adversely affects their reliability. The present invention seeks to remove or at least ameliorate one or both of the problems described above.

According to a first aspect of the invention there is provided a hand operated pallet truck including lifting forks for carrying a load, wheels for engaging the ground and a handle by which the pallet truck can be pulled or pushed over the ground, the handle being mounted for movement between an upright position and a lowered position in which it is inclined at an angle of less than 45 degrees to the horizontal, and a mechanism connected between the handle and at least one wheel to convert movement of the handle into rotation of said at least one wheel, wherein the mechanism includes a coupling which has a first state representing a first condition of the mechanism in which the handle is not drivingly coupled to said at least one wheel and a second state representing a second condition of the mechanism in which the handle is drivingly coupled to said at least one wheel, characterized in that the coupling comprises one or more pads frictionally engaging the inside of a cylindrical surface concentric with the axis of rotation of said at least one wheel in said second state of the coupling.

The cylindrical surface is preferably formed on the inside of a ground engaging part of said at least one wheel.

A coupling of the kind defined above, which may also be referred to as a clutch, can be made in a form that is very simple and very reliable. It can also be made easy for a user to operate and may also allow gradual engagement and slippage in the drive coupling if desired. Friction brakes in which pads frictionally engage the inside of a cylindrical surface concentric with the axis of rotation of said at least one wheel to brake a pallet truck have been employed for many decades and have proved entirely reliable and durable even when handling heavy loads.

Where reference is made to the handle having an "upright" position, it should be understood that this may be, but is not necessarily, a vertical position. For example a handle that is inclined at an angle of 10 degrees or even 20 degrees to the vertical is still to be regarded as "upright" in the sense in which that term is used in the present specification.

Whilst the coupling need not have any bias or may even be biased into the second state, it is preferred that the coupling is biased into the first state. Once the truck is moving, the first state of the coupling, in which it does not serve as a drive-transmitting coupling, is usually the required state, at least until it is desired to brake the movement of the truck.

More particularly, the one or more pads are preferably resiliently biased to a position in which they do not engage the cylindrical surface but are movable against the resilient bias to a position in which they do engage the cylindrical surface, thereby converting the coupling from the first state to the second state. A coupling of this design can be very simple and very reliable. It can also be made easy for a user to operate and may allow slippage in the drive coupling if desired.

Preferably the one or more pads comprise a first pad and a second pad arranged to engage diametrically opposite regions of the cylindrical surface when the coupling is in the second state. In that case the radial forces applied by the pads to the wheel may cancel one another out.

The one or more pads preferably define a ring extending around substantially all 360 degrees of the cylindrical surface. The ring is preferably resiliently biased to a contracted state but is expanded against the resilient bias to an expanded state when the coupling is in the second state. In an embodiment of the invention described below the resilient bias is provided by tension springs connected between the pads.

It is preferred that, when the mechanism is in the second condition, the handle is drivingly coupled to said at least one wheel for transmitting drive from the handle to the wheel for both directions of movement of the handle; preferably, movement of the handle in one direction rotates said at least one wheel in one direction and movement of the handle in the opposite direction rotates said at least one wheel in the opposite direction. Similarly, it is preferred that when the mechanism is in the first condition, the handle is not drivingly coupled to said at least one wheel for transmitting drive from the handle to the wheel for either direction of movement of the handle. These preferred features can be achieved very simply, reliably and durably when the coupling of the invention is employed; indeed, special measures have to be taken in some other part of the mechanism to have any other arrangement.

Preferably said at least one wheel comprises a pair of wheels rotatable about a common axis and both wheels are drivingly coupled to the handle when the mechanism is in the second condition. Both wheels preferably incorporate substantially the same coupling arrangement; for example, sets of one or more friction pads are preferably associated with both wheels.

A manual actuating arrangement is preferably provided for converting the coupling from the first state to the second state. The manual actuating arrangement preferably includes a cable able to be moved against a resilient bias to convert the coupling into the second state. The manual actuating arrangement may comprise a manually operable pivoted lever mounted on the handle towards its free end. Thus a user may manually move the cable and thereby convert the coupling into the second state. Commonly, hand-operated pallet trucks have three sets of wheels: first and second sets of wheels are positioned beneath respective forwardly projecting lifting forks, and a third set of wheels is positioned at the rear of the truck. The third set of wheels are commonly steerable and for that purpose are linked to the hand assembly so that movement of the handle about a vertical axis turns the third set of wheels. Whilst it is possible for the third set of wheels to comprise a single wheel it is generally preferred that a pair of coaxial wheels are provided. In that latter case, the mechanism between the handle and the at least one wheel may be coupled to only one of the pair of wheels but is preferably coupled to both wheels of the pair. Similarly, there may be, for each wheel of the pair, one or more pads frictionally enagaging the inside of a cylindrical surface concentric with the axis of rotation of the wheel.

In an embodiment of the invention described below with reference to the drawings, the manual actuating arrangement operates in the same manner in all positions of the handle, to allow a user to convert the coupling into the second state. In some cases, a user may maintain the coupling in the second state for longer than desirable and there is then an advantage in arranging for the coupling to return to the first state and override the user's input. Accordingly the manual actuating arrangement may be arranged to be overridden, preferably automatically, to return the coupling to the first state. The overriding is preferably caused by the handle reaching a certain inclination. For example, in a case where the handle is moving towards a vertical position, the override preferably comes into effect when the inclination of the handle to the vertical is less than a given angle, for example, when the inclination of the handle to the vertical is less than 10 degrees; alternatively or additionally, in a case where the handle is moving towards a horizontal position, the override preferably comes into effect when the inclination of the handle to the horizontal is less than a given angle, for example, when the inclination of the handle to the horizontal is less than 10 degrees. Such an automatic return of the coupling may be achieved in a variety of ways; one convenient way involves the use of a bowden cable transmission derived from movement of the handle relative to the body of the truck.

The invention further provides a method of operating a pallet truck by hand, the method including the steps of providing a pallet truck as defined above and moving the handle downwards when the mechanism is in the second condition to drivingly rotate said at least one wheel and move the pallet truck over the ground.

The method preferably further includes the step of allowing the mechanism to revert to the first condition while the pallet truck is moving. That may be achieved by a user releasing a trigger to relieve tension in a cable. The method preferably further includes the step of converting the mechanism back into the second condition while the pallet truck is moving. When the mechanism is converted back to the second condition, there may be some slippage in the coupling. Such slippage need not, however, damage the coupling.

The same activation is preferably required by the user to convert the mechanism into the second condition, regardless of whether the truck is stationary, moving forwards or moving backwards. That feature, together with the feature that the mechanism can accommodate slippage but is nonetheless able to provide a robust coupling able to transmit high friction forces enable a very good and simple control of the truck to be obtained.

By way of example embodiments of the invention will now be described with reference to the accompanying schematic drawings, of which:
- Fig. 1: is a side view of a portion of a hand held operated pallet truck in a typical rest position with its handle in an upright position;
- Fig. 2: is a plan view of a wheel assembly of the pallet truck;
- Fig. 3: is a side view of the portion of the pallet truck shown in Fig. 1, with the handle in a lowered position;
- Fig. 4: is a front view of the free end of the handle in a first embodiment of the invention; and
- Fig. 5: is an exploded view of a wheel assembly of the truck.

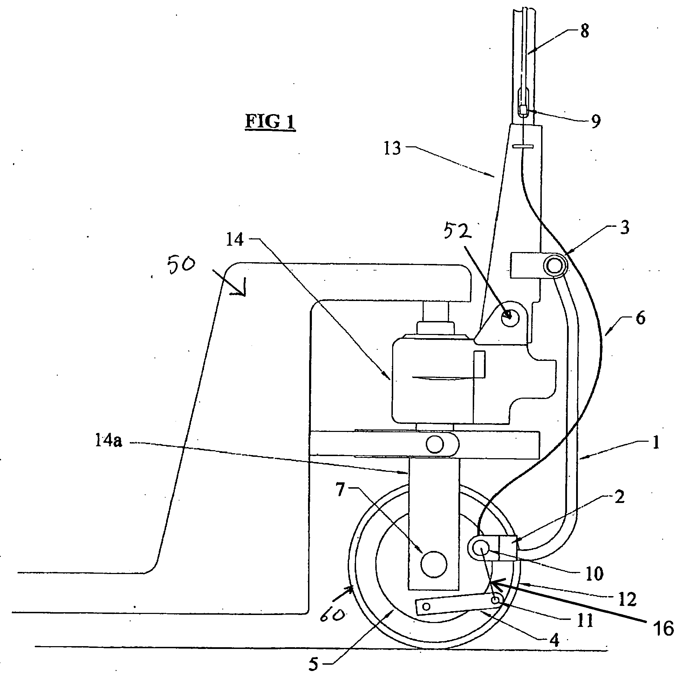

Referring to Figs. 1 to 5, the hand operated pallet truck is in most respects of conventional design, including a main body 50 carrying lifting forks for carrying a load, front wheels beneath the lifting forks and a pair of rear wheels 12. The truck has a handle 13 which is pivotally mounted at a pivot 52.

A hydraulic pump 14 is provided for raising the lifting forks, the pump being operated by reciprocating the handle. The rear wheels 12, the pump 14, a main support 14a and the handle 13 all form respective parts of an assembly that is rotatable about a vertical axis, allowing the truck to be steered by a user moving the free end of the handle 13.

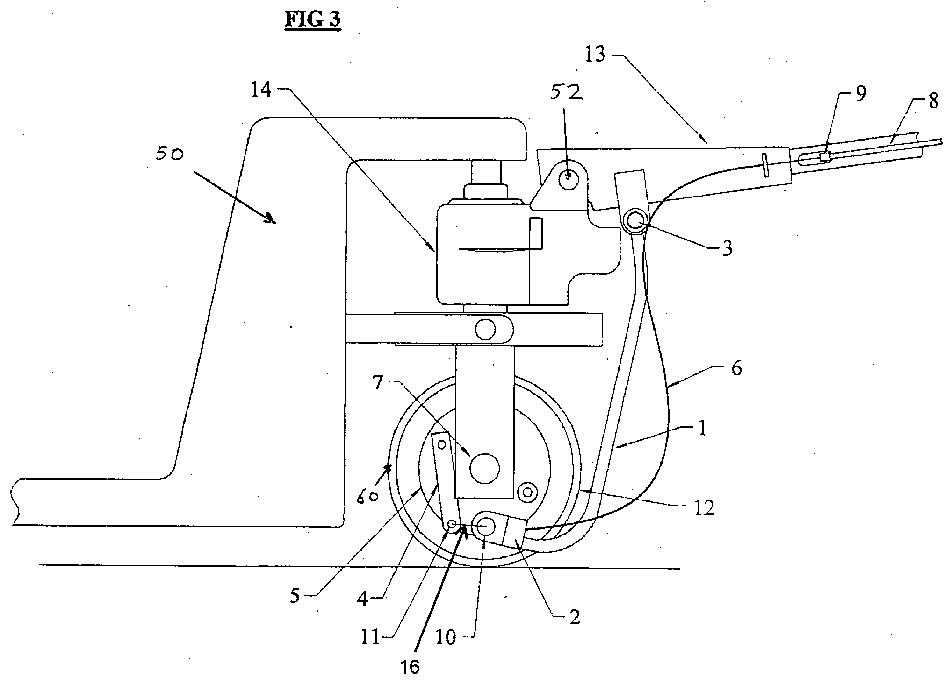

Fig. 1 shows the handle 13 at one extreme of its range of pivotal movement, in which it is in an upright position and the upper part of the handle is substantially vertical. Fig. 3 shows the handle 13 in a lowered position in which it is almost horizontal.

The parts of the truck described above are conventional and trucks of this general design are well known. Those parts of the truck will not therefore be described further here.

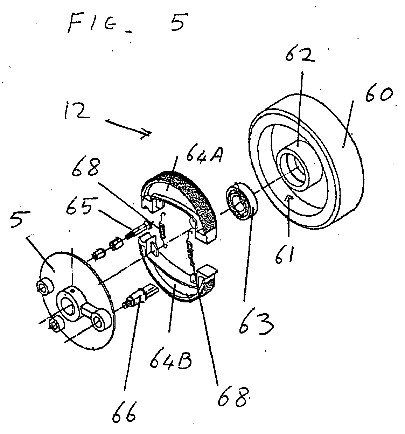

Each of the two wheels 12 of the truck shown in Figs. 1 to 5 is provided with a friction coupling and the truck includes a mechanism for operating those couplings as will now be described with particular reference to Fig. 5. The wheel assembly shown in Fig. 5 generally comprises an outer ground engaging part 60 which includes an inwardly facing cylindrical surface 61 around its periphery and a hub 62 that receives a bearing 63. A pair of friction pads 64A and 64B are provided between the hub 62 and the surface 61 with the friction faces of the pads adjacent to the surface 61. The pads 64A and 64B are resiliently biased towards each other (that is away from the surface 61) by springs 68 and are adjacent to one another at diametrically opposite regions of the wheel periphery. At one of those regions a shaft 65 is interposed between the pads and at the opposite region a cam separator 66 is interposed between the pads. The cam separator 66 can be rotated to move the adjacent parts of the pads 64A and 64B apart and press them against the surface 61. The shaft 65 and the cam separator 66 are mounted in a backplate 5. As will now be understood, when the pads 64A and 64B are pressed against the surface 61, the backplate 5 is held by friction in a fixed relationship to the ground engaging part 60 of the wheel so a driving connection is established between those parts. On the other hand when the pads 64A and 64B are not pressed against the surface 61, there is no such drive connection and the ground engaging part 60 of the wheel is free to rotate independently. It will also be noted that the pads 64A and 64B are diametrically opposite one another. When they are pressed apart they apply equal and opposite forces on diametrically opposite parts of the surface 61. As can be seen in the drawings, the area of engagement of the pads with the surface 61 extends around substantially all 360 degrees of the surface 61.

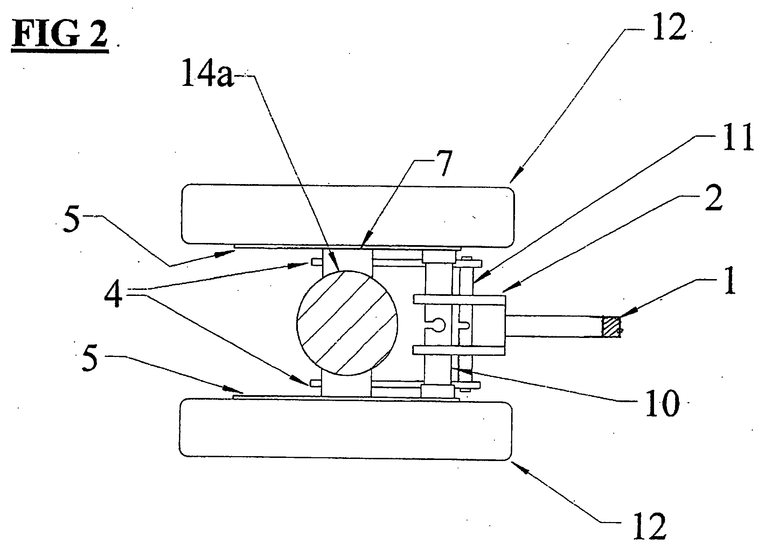

Referring now also to Figs. 1 to 3, rotation of the cam separator 66 is controlled by an operating arm 4 fixed to the separator 66 at one end and connected at its other end to a cross-member 11 (Fig. 2) and hence to an operating cable. A bowden cable 6 comprising an outer cable housing and an inner cable extends from the handle 13 to an outer cable anchor 10 fixed to the backplate 5, with the inner cable extending on to the connection to the operating arm 4. Thus, if, and only if, the inner cable 16 is pulled, drawing the arm 4 towards the anchor 10, the friction pads 64A and 64B are pressed against the ground engaging part 60 of the wheel coupling that part to the backplate 5.

A connecting link 1 is pivotally connected to the handle 13 at 3 and to the backplate 5, such that pivoting downward movement of the handle causes clockwise rotation of the backplate 5 around the wheel axle 7, as seen in Fig. 3, whilst pivoting upward movement of the handle causes anticlockwise rotation of the backplate 5. As will now be understood, whether or not that movement is translated into drive of the wheel around the axle 7 is dependent on the friction coupling, that is on whether the pads 64A and 64B are pressed into engagement with the surface 61.

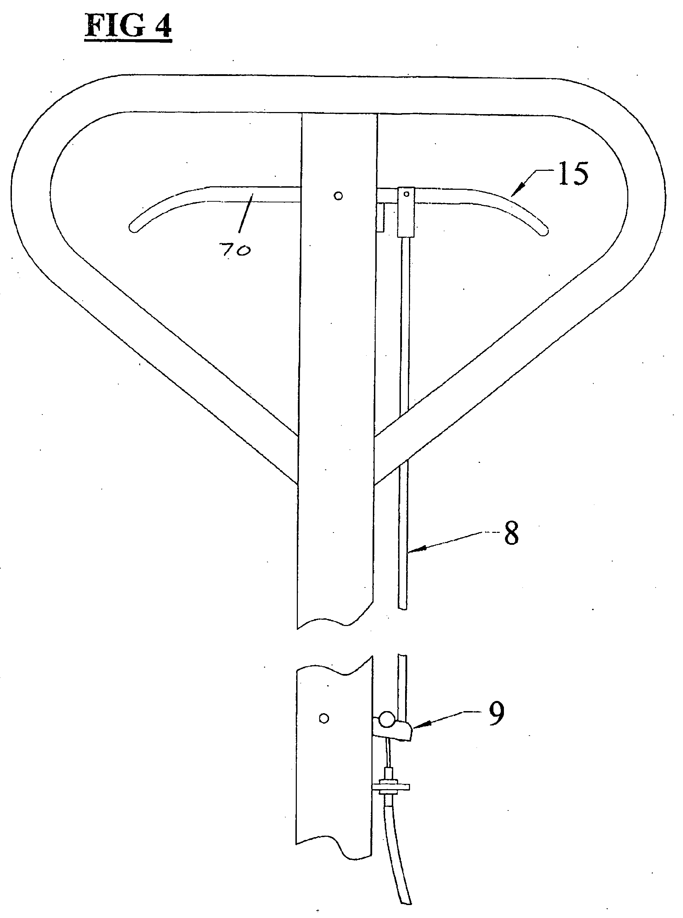

The cable 6 extends from the anchor 10, fixed to a fork 2 on the end of the link 1, to the handle 13 and the inner cable is connected to a pivotally mounted lever 9 on the handle 13 (see Fig. 4 in particular). Movement of the lever 9 is achieved via an operating rod 8 pivotally connected at one end to the lever 9 and at the other end to a pivotally mounted operating trigger 15 at the free end of the handle 13. As can be seen in Fig. 4, another trigger 70 is provided on the handle for controlling operation of the pump 14 by the handle 13 in a manner that is known *per* se and will not be described further here.

An understanding of how the single lever 9 and cable 16 operates both wheels 12 of a pair is best gained from Fig. 2 where it can be seen that there are a pair of operating arms 4 (one for each wheel) connected to the same cross-member 11.

In the arrangement shown, the movement of the pads 64A and 64B into contact with the adjacent surface 61 of the ground engaging part 60 of the wheel is simply achieved by a user pulling the trigger 15. While the trigger is pulled the pads 64A and 64B are pressed into engagement and, if a user releases the trigger, the pads move out of engagement.

Operation of the truck will now be described briefly, starting from a situation in which the truck is stationary with the handle upright and it is desired to pull a load that has already been raised on the forks of the truck.

With the handle vertical, a user pulls the trigger 15 raising the rod 8 and causing the pads 64A and 64B to move against their resilient bias into contact with the pair of cylindrical surfaces 61 of the ground engaging parts 60 of the wheels 12. The backplate 5 of each of the pair of wheels 12 is now frictionally fixed to the ground engaging part 60 of each wheel. The user now pulls the handle 13 downwardly causing the backplates 5 to be rotated clockwise (as seen in Fig. 1) and therefore, via the pads 64A and 64B, causing the ground engaging parts of the wheels to rotate, moving the truck backwards. It may be noted that during this movement a user has complete control of rotation of the wheel by movement of the handle so that, if there is a need to stop, that can also be achieved by halting movement of the handle: in this case the pads 64A and 64B act as brake pads.

In the usual case, where a user wishes to continue the pulling motion, the handle continues to be moved downwardly and a user may begin to apply a pulling force to the handle. Once the handle has been lowered to a height convenient for pulling, the user releases the trigger 15 decoupling the backplate 5 from the wheels 12. At this stage, the truck will have obtained significant momentum and a steady force will then be required to maintain its speed of travel over the ground. If the user wishes the truck to move faster, he may either simply pull the handle harder or may return the handle to an elevated position, move the handle downwardly and pull the trigger 15 again as he does so to deliver a high acceleration force with little effort. To brake the truck a user can hold the handle 13 in a given position and pull the trigger 15. Gentle pulling of the trigger 15 will generate some braking but also allow slippage of the wheels 12 relative to the pads 64A and 64B.

Braking can also be controlled, when the trigger is pulled, by allowing a controlled pivotal movement of the handle, that pivotal movement being driven by the braked wheels 12 which try to continue to rotate, driven by the momentum of the load on the truck. As will be understood a user can cause the truck to move in the opposite direction in a similar fashion, but by pivoting the handle upwards while pulling the trigger 15.

The truck described above can be easily started and stopped and is easy to manoeuvre in confined spaces. In particular it can be moved short distances forwards and backwards with little effort. For example, it can be moved a short distance from a position where it obstructs a given activity, such as the passing of a roll cage, and can then be moved back once the given activity has been completed. The manual actuation of the coupling simply by pulling the trigger 15, which is the same actuation in forward and reverse makes control especially easy. At the same time, the design is simple and robust.

Whilst a particular arrangement of the invention has been described with reference to the drawings, it should be understood that many others are possible. For example, in the drawings a particularly simple form of hand operated pallet truck is described. It will be understood, however, that the invention may be applied to other forms of hand operated truck. For example the truck may be a high lift truck and/or it may be partly electrically powered, for example, by a battery; electrical power may be used for raising the forks of the truck and/or for driving the truck forwards or backwards; in the latter case the movement of the handle with the friction pads coupling the handle to the wheel(s) may, when employed by a user, supplement or replace the electrical power for driving the truck.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims.

## Claims

1. A hand operated pallet truck including lifting forks for carrying a load, wheels (12) for engaging the ground and a handle (13) by which the pallet truck can be pulled or pushed over the ground, the handle (13) being mounted for movement between an upright position and a lowered position in which it is inclined at an angle of less than 45 degrees to the horizontal, and a mechanism connected between the handle (13) and at least one wheel (12) to convert movement of the handle (13) into rotation of said at least one wheel (12), wherein the mechanism includes a coupling which has a first state representing a first condition of the mechanism in which the handle (13) is not drivingly coupled to said at least one wheel (12) and a second state representing a second condition of the mechanism in which the handle (13) is drivingly coupled to said at least one wheel (12) **characterised in that** the coupling comprises one or more pads (64A, 64B) frictionally engaging the inside of a cylindrical surface (61) concentric with the axis of rotation of said at least one wheel (12) in said second state of the coupling.

2. A pallet truck according to claim 1, in which the cylindrical surface (61) is formed on the inside of a ground engaging part (60) of said at least one wheel (12).

3. A pallet truck according to claim 1 or 2, in which the coupling is biased into the first state.

4. A pallet truck according to any preceding claim, in which the one or more pads (64A, 64B) are resiliently biased to a position in which they do not engage the cylindrical surface (61) but are movable against the resilient bias to a position in which they do engage the cylindrical surface (61), thereby converting the coupling from the first state to the second state.

5. A pallet truck according to claim 4, in which the one or more pads (64A, 64B) comprise a first pad (64A)and a second pad (64B) arranged to engage diametrically opposite regions of the cylindrical surface (61) when the coupling is in the second state.

6. A pallet truck according to claim 4 or 5, in which the one or more pads (64A, 64B) define a ring extending around substantially all 360 degrees of the cylindrical surface (61).

7. A pallet truck according to claim 6, in which the ring is resiliently biased to a contracted state but is expanded against the resilient bias to an expanded state when the coupling is in the second state.

8. A pallet truck according to any preceding claim, in which, when the coupling is in the second state, the handle (13) is drivingly coupled to said at least one wheel (12) for transmitting drive from the handle (13) to the wheel (12) for both directions of movement of the handle (13).

9. A pallet truck according to any preceding claim, in which, when the coupling is in the first state, the handle (13) is not drivingly coupled to said at least one wheel (12) for transmitting drive from the handle (13) to the wheel (12) for either direction of movement of the handle (13).

10. A pallet truck according to any preceding claim, in which said at least one wheel (12) comprises a pair of wheels (12) rotatable about a common axis and both wheels (12) are drivingly coupled to the handle (13) when the mechanism is in the second condition.

11. A pallet truck according to any preceding claim, in which a manual actuating arrangement (15,8,9,16,11,4,66) is provided for converting the coupling from the first state to the second state.

12. A pallet truck according to claim 11, in which the manual actuating arrangement includes a cable (16) able to be moved against a resilient bias to convert the coupling into the second state.

13. A pallet truck according to claim 11 or 12, in which the manual actuating arrangement is arranged to be overridden to return the coupling to the first state when the handle (13) is at an inclination of less than 10 degrees to the vertical and/or when the handle (13) is at an inclination of less than 10 degrees to the horizontal.

14. A method of operating a pallet truck by hand, the method including the steps of providing a pallet truck according to any preceding claim and moving the handle (13) downwards when the mechanism is in the second condition to drivingly rotate said at least one wheel (12) and move the pallet truck over the ground.

15. A method according to claim 14, further including the step of allowing the mechanism to revert to the first condition while the pallet truck is moving.

16. A method according to claim 15, further including the step of converting the mechanism back into the second condition while the pallet truck is moving.

17. A method according to claim 16, in which, when the mechanism is converted back to the second condition, there is some slippage in the coupling.

## Patentansprüche

1. Handbetätigter Hubwagen mit Hubgabeln zu Tragen einer Last, Rädern (12) zum Angriff am Boden und einem Griff (13), mittels dem der Hubwagen über den Boden gezogen oder geschoben werden kann, wobei der Griff (13) zur Bewegung zwischen einer aufrechten Position und einer abgesenkten Position angebracht ist, in der er in einem Winkel von weniger als 45 Grad zur Horizontelen geneigt ist, und einem Mechanismus, der zwischen dem Griff (13) und mindestens einem Rad (12) angeschlossen ist, um eine Bewegung des Griffs (13) in eine Drehung des mindestens einen Rads (12) umzusetzen, wobei der Mechanismus eine Kupplung hat, die über einen ersten Zustand verfügt, der eine erste Verfassung des Mechanismus darstellt, in der der Griff (13) nicht mit dem mindestens einen Rad (12) antriebsgekoppelt ist, und einen zweiten Zustand verfügt, der eine zweite Verfassung des Mechanismus darstellt, in der der Griff (13) mit dem mindestens einen Rad (12) antriebsgekoppelt ist, **dadurch gekennzeichnet, dass** die Kupplung einen Block oder mehrere Blöcke (64A, 64B) aufweist, die im zweiten Zustand der Kupplung in Reibungsangriff an der Innenseite einer mit der Drehachse des mindestens eines Rads (12) konzentrischen Zylinderfläche (61) ist bzw. sind.

2. Hubwagen nach Anspruch 1, wobei die Zylinderfläche (61) auf der Innenseite eines Bodenangriffsteils (60) des mindestens einen Rads (12) ausgebildet ist.

3. Hubwagen nach Anspruch 1 oder 2, wobei die Kupplung in den ersten Zustand vorgespannt ist.

4. Hubwagen nach einem der vorhergehenden Ansprüche, wobei der eine Block oder die mehreren Blöcke (64A, 64B) elastisch in eine Stellung vorgespannt ist bzw. sind, in der er bzw. sie an der Zylinderfläche (61) nicht angreift bzw. angreifen, aber entgegen der elastischen Vorspannung in eine Stellung bewegbar ist bzw. sind, in der er bzw. sie an der Zylinderfläche (61) angreift bzw. angreifen, wodurch die Kupplung vom ersten Zustand in den zweiten Zustand versetzt wird.

5. Hubwagen nach Anspruch 4, wobei der eine Block oder die mehreren Blöcke (64A, 64B) einen ersten Block (64A) und einen zweiten Block (64B) umfasst bzw. umfassen, die dazu angeordnet sind, an diametral entgegengesetzten Bereichen der Zylinderfläche (61) anzugreifen, wenn sich die Kupplung im zweiten Zustand befindet.

6. Hubwagen nach Anspruch 4 oder 5, wobei der eine Block oder die mehreren Blöcke (64A, 64B) einen Ring definiert bzw. definieren, der sich im Wesentlichen um alle 360 Grad der Zylinderfläche (61) erstreckt.

7. Hubwagen nach Anspruch 6, wobei der Ring elastisch in einen kontrahierten Zustand vorgespannt ist, aber entgegen der elastischen Vorspannung in einen expandierten Zustand expandiert ist, wenn sich die Kupplung im zweiten Zustand befindet.

8. Hubwagen nach einem der vorhergehenden Ansprüche, wobei, wenn sich die Kupplung im zweiten Zustand befindet, der Griff (13) mit dem mindestens einen Rad (12) antriebsgekoppelt ist, um für beide Bewegungsrichtungen des Griffs (13) einen Antrieb vom Griff (13) auf das Rad (12) zu übertragen.

9. Hubwagen nach einem der vorhergehenden Ansprüche, wobei, wenn sich die Kupplung im ersten Zustand befindet, der Griff (13) nicht mit dem mindestens einen Rad (12) antriebsgekoppelt ist, um für jede Bewegungsrichtung des Griffs (13) einen Antrieb vom Griff (13) auf das Rad (12) zu übertragen.

10. Hubwagen nach einem der vorhergehenden Ansprüche, wobei das mindestens eine Rad (12) ein Paar Räder (12) umfasst, die um eine gemeinsame Achse drehbar sind, und beide Räder (12) mit dem Griff (13) antriebsgekoppelt sind, wenn sich der Mechanismus in der zweiten Verfassung befindet.

11. Hubwagen nach einem der vorhergehenden Ansprüche, wobei eine manuelle Betätigungseinrichtung (15, 8, 9, 16, 11, 4, 66) vorgesehen ist, um die Kupplung vom ersten Zustand in den zweiten Zustand zu versetzen.

12. Hubwagen nach Anspruch 11, wobei die manuelle Betätigungseinrichtung ein Seil (16) umfasst, das entgegen einer elastischen Vorspannung bewegt werden kann, um die Kupplung in den zweiten Zustand zu versetzen.

13. Hubwagen nach Anspruch 11 oder 12, wobei die manuelle Betätigungseinrichtung dazu eingerichtet ist, außer Kraft gesetzt zu werden, um die Kupplung in den ersten Zustand zurückzuversetzen, wenn sich der Griff (13) in einer Neigung von weniger als 10 Grad zur Vertikalen befindet und/oder wenn sich der Griff (13) in einer Neigung von weniger als 10 Grad zur Horizontalen befindet.

14. Verfahren zum Betätigen eines Hubwagens mit der Hand, wobei das Verfahren die Schritte umfasst, einen Hubwagen nach einem der vorhergehenden Ansprüche bereitzustellen und den Griff (13) nach unten zu bewegen, wenn sich der Mechanismus in der zweiten Verfassung befindet, um das mindestens eine Rad (12) antriebstechnisch in Drehung zu versetzen und den Hubwagen über den Boden zu bewegen.

15. Verfahren nach Anspruch 14, darüber hinaus den Schritt umfassend, den Mechanismus in die erste Verfassung zurückkehren zu lassen, während sich der Hubwagen bewegt.

16. Verfahren nach Anspruch 15, darüber hinaus den Schritt umfassend, den Mechanismus zurück in die zweite Verfassung zu versetzen, während sich der Hubwagen bewegt.

17. Verfahren nach Anspruch 16, wobei, wenn der Mechanismus zurück in die zweite Verfassung versetzt wird, etwas Schlupf in der Kupplung besteht.

## Revendications

1. Transpalette avec commande manuelle comprenant des fourches de levage pour porter une charge, des roues (12) pour mettre en prise le sol et une poignée (13) grâce à laquelle le transpalette peut être tiré ou poussé sur le sol, la poignée (13) étant montée pour le mouvement entre une position ascendante et une position abaissée dans laquelle elle est inclinée à un angle inférieur à 45 degrés par rapport à l'horizontale, et un mécanisme raccordé entre la poignée (13) et au moins une roue (12) afin de convertir le mouvement de la poignée (13) en rotation de ladite au moins une roue (12), dans lequel le mécanisme comprend un couplage qui a un premier état représentant une première condition du mécanisme dans laquelle la poignée (13) n'est pas couplée par entraînement à ladite au moins une roue (12) et un second état représentant une seconde condition du mécanisme dans laquelle la poignée (13) est couplée par entraînement à ladite au moins une roue (12), **caractérisé en ce que** le couplage comprend un ou plusieurs coussinets (64A, 64B) mettant en prise, par friction, l'intérieur d'une surface cylindrique (61) excentrique avec l'axe de rotation de ladite au moins une roue (12) dans ledit second état du couplage.

2. Transpalette selon la revendication 1, dans lequel la surface cylindrique (61) est formée sur l'intérieur d'une partie de mise en prise de sol (60) de ladite au moins une roue (12).

3. Transpalette selon la revendication 1 ou 2, dans lequel le couplage est sollicité dans le premier état.

4. Transpalette selon l'une quelconque des revendications précédentes, dans lequel les un ou plusieurs coussinets (64A, 64B) sont sollicités de manière résiliente dans une position dans laquelle ils ne mettent pas en prise la surface cylindrique (61), mais dans laquelle ils sont mobiles contre la sollicitation résiliente dans une position dans laquelle ils mettent en prise la surface cylindrique (61), faisant ainsi passer le couplage du premier état au second état.

5. Transpalette selon la revendication 4, dans lequel les un ou plusieurs coussinets (64A, 64B) comprennent un premier coussinet (64A) et un second coussinet (64B) agencés pour mettre en prise des régions diamétralement opposées de la surface cylindrique (61) lorsque le couplage est dans le second état.

6. Transpalette selon la revendication 4 ou 5, dans lequel les un ou plusieurs coussinets (64A, 64B) définissent une bague s'étendant sensiblement autour de la totalité des 360 degrés de la surface cylindrique (61).

7. Transpalette selon la revendication 6, dans lequel la bague est sollicitée de manière résiliente dans un état contracté, mais ne subit pas d'expansion contre la sollicitation résiliente dans un état expansé, lorsque le couplage est dans le second état.

8. Transpalette selon l'une quelconque des revendications précédentes, dans lequel, lorsque le couplage est dans le second état, la poignée (13) est couplée par entraînement à ladite au moins une roue (12) pour transmettre l'entraînement de la poignée (13) à la roue (12) pour deux directions de mouvement de la poignée (13).

9. Transpalette selon l'une quelconque des revendications précédentes, dans lequel, lorsque le couplage est dans le premier état, la poignée (13) n'est pas couplée par entraînement à ladite au moins une roue (12) pour transmettre l'entraînement de la poignée (13) à la roue (12) pour l'une ou l'autre des directions de mouvement de la poignée (13).

10. Transpalette selon l'une quelconque des revendications précédentes, dans lequel ladite au moins une roue (12) comprend une paire de roues (12) pouvant tourner autour d'un axe commun et les deux roues (12) sont couplées par entraînement à la poignée (13) lorsque le mécanisme est dans la seconde condition.

11. Transpalette selon l'une quelconque des revendications précédentes, dans lequel un agencement d'actionnement manuel (15, 8, 9, 16, 11, 4, 66) est prévu pour faire passer le couple du premier état au second état.

12. Transpalette selon la revendication 11, dans lequel l'agencement d'actionnement manuel comprend un câble (16) pouvant être déplacé contre une sollicitation résiliente afin de convertir le couplage dans le second état.

13. Transpalette selon la revendication 11 ou 12, dans lequel l'agencement d'actionnement manuel est agencé pour être outrepassé afin de ramener le couplage dans le premier état lorsque la poignée (13) est à une inclinaison inférieure à 10 degrés par rapport à la verticale et/ou lorsque la poignée (13) est à une inclinaison inférieure à 10 degrés par rapport à l'horizontale.

14. Procédé pour actionner un transpalette à la main, le procédé comprenant les étapes consistant à prévoir un transpalette selon l'une quelconque des revendications précédentes et déplacer la poignée (13) vers le bas lorsque le mécanisme est dans la seconde condition afin de faire tourner par entraînement ladite au moins une roue (12) et déplacer le transpalette sur le sol.

15. Procédé selon la revendication 14, comprenant en outre l'étape consistant à autoriser le mécanisme à revenir dans la première condition alors que le transpalette se déplace.

16. Procédé selon la revendication 15, comprenant en outre l'étape consistant à ramener le mécanisme dans la seconde condition alors que le transpalette se déplace.

17. Procédé selon la revendication 16, dans lequel, lorsque le mécanisme est ramené dans la seconde condition, il existe un certain patinage dans le couplage.
